(19) Europäisches Patentamt
European Patent Office
Office européen des brevets

(11) **EP 4 399 483 B1**

(12) **EUROPÄISCHE PATENTSCHRIFT**

(45) Veröffentlichungstag und Bekanntmachung des Hinweises auf die Patenterteilung:
**21.01.2026 Patentblatt 2026/04**

(21) Anmeldenummer: **21773530.7**

(22) Anmeldetag: **06.09.2021**

(51) Internationale Patentklassifikation (IPC):
**G01C 3/08** (2006.01)  **G01C 1/00** (2006.01)
**G01S 5/02** (2010.01)

(52) Gemeinsame Patentklassifikation (CPC):
**G01C 3/08; G01C 1/00;** G01S 5/0247; G01S 11/02

(86) Internationale Anmeldenummer:
**PCT/EP2021/074456**

(87) Internationale Veröffentlichungsnummer:
**WO 2023/030660 (09.03.2023 Gazette 2023/10)**

(54) **SENSORVORRICHTUNG UND SENSORSYSTEM ZUR ÜBERWACHUNG EINER MASCHINE**

SENSOR DEVICE AND SENSOR SYSTEM FOR MONITORING A MACHINE

DISPOSITIF DE DÉTECTION ET SYSTÈME DE DÉTECTION POUR SURVEILLER UNE MACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.07.2024 Patentblatt 2024/29**

(73) Patentinhaber: **Fraba B.V.**
**6416 SG Heerlen (NL)**

(72) Erfinder:
• HERPERS, Anja
  **52074 Aachen (DE)**
• MOENCH, Ingo
  **Singapur 207855 (SG)**
• SCHUBERT, Tobias
  **50735 Köln (DE)**
• PRITZKAU, Dimitri
  **53844 Troisdorf (DE)**

(74) Vertreter: **terpatent PartGmbB**
**Burgunderstraße 29**
**40549 Düsseldorf (DE)**

(56) Entgegenhaltungen:
WO-A1-2018/236343     CN-A- 110 389 350
DE-A1- 102005 000 732

• SHAHMANSOORI ARASH ET AL: "5G Position and Orientation Estimation through Millimeter Wave MIMO", 2015 IEEE GLOBECOM WORKSHOPS (GC WKSHPS), IEEE, 6 December 2015 (2015-12-06), pages 1 - 6, XP032871009, DOI: 10.1109/GLOCOMW.2015.7413967

**Beschreibung**

Die vorliegende Erfindung betrifft ein Sensorsystem zur Überwachung einer Maschine, insbesondere einer Baumaschine wie beispielsweise ein Bagger, ein Kran oder eine Planierraupe, wobei das Sensorsystem eine Vielzahl von Sensorvorrichtungen aufweist, die jeweils eine Gyroskopsensoreinheit und/oder eine Beschleunigungssensoreinheit, und eine Funkschnittstelle zur Datenübertragung über ein Funksignal umfassen.

Sensorvorrichtungen mit einer Gyroskopsensoreinheit und/oder einer Beschleunigungssensoreinheit werden beispielweise auch als Drehratensensor, Kreiselinstrument, Beschleunigungsmesser, Beschleunigungsaufnehmer, Akzelerometer, Vibrationsaufnehmer, Schwingungsaufnehmer, G-Sensor, B-Messer oder inertiale Messeinheit bezeichnet.

Derartige Sensorvorrichtungen und Sensorsysteme mit derartigen Sensorvorrichtungen werden häufig zur Überwachung von Maschinenbewegungen verwendet. Hierbei sind die einzelnen Sensorvorrichtungen der Sensorsysteme typischerweise an unterschiedlichen, zueinander beweglichen Teilen der Maschine angeordnet.

Der Begriff Funkschnittstelle bezeichnet im vorliegenden Kontext alle Schnittstellen, die eine kabellose Datenübertragung ermöglichen. Typische Funkschnittstellen sind beispielsweise RFID-Schnittstellen, WLAN-Schnittstellen, Mobilfunkschnittstellen, Bluetoothschnittstellen oder IrDA-Schnittstellen.

Aus der US 2018/0372498 A1 ist ein Sensorsystem zur Überwachung der Bewegung eines Baggers bekannt. Das Sensorsystem umfasst eine Vielzahl von inertialen Messeinheiten, die an zueinander beweglichen Teilen des Baggers angeordnet sind. Zur Bestimmung der räumlichen Lage des Baggers sowie der einzelnen Teile des Baggers, insbesondere der Baggerschaufel, werden die Sensordaten der Vielzahl von Sensorvorrichtungen mittels eines komplexen Auswertealgorithmus fusioniert. Zur Verbesserung der Genauigkeit des Sensorsystems werden vorzugsweise weitere andersartige Sensorvorrichtungen verwendet, wie beispielsweise eine GPS-Vorrichtung, eine Radar-Vorrichtung oder Kameras.

Aus der WO 2018/236343 A1 ist eine Sensorvorrichtung bekannt, die eine Gyroskopsensoreinheit oder Beschleunigungssensoreinheit umfasst.

Aus dem wissenschaftlichen Artikel "5G Position and Orientation Estimation through Millimeter Wave MIMO" ist es bekannt, 5G-Mobilfunktechnologie zur Positionsbestimmung zu verwenden.

Es stellt sich vor diesem Hintergrund die Aufgabe, eine relativ einfache und dennoch zuverlässige Überwachung von Maschinenbewegungen zu ermöglichen.

Diese Aufgabe wird durch ein Sensorsystem zur Überwachung einer Maschine mit den Merkmalen des Anspruchs 1 gelöst.

Das erfindungsgemäße Sensorsystem zur Überwachung einer Maschine umfasst eine Vielzahl von nachfolgend beschriebenen Sensorvorrichtungen.

Erfindungsgemäß weist jede Sensorvorrichtung - zusätzlich zu der Gyroskopsensoreinheit und/oder der Beschleunigungssensoreinheit sowie der Funkschnittstelle - eine Abstandsbestimmungseinheit auf, die eingerichtet ist, ein empfangenes Funksignal zu analysieren und basierend auf dem Funksignal einen Antennenabstand zu einer Antennenvorrichtung zu bestimmen, von der das empfangene Funksignal ausgesendet wurde. Zur Abstandbestimmung kann beispielsweise eine Funksignallaufzeit und/oder eine Funksignalamplitude ausgewertet werden. Der bestimmte Antennenabstand liefert eine zusätzliche Information zur räumlichen Lage der Sensorvorrichtung, ohne dass hierfür eine zusätzliche Sensorik vorgesehen werden muss.

Die zusätzliche Lageinformation ermöglicht, bei der Verwendung mehrerer derartiger Sensorvorrichtungen in dem erfindungsgemäßen Sensorsystem, eine relativ einfache und gleichzeitig exakte Bestimmung der räumlichen Lage einzelner Maschinenteile zueinander und somit eine relativ einfache und zuverlässige Überwachung einer Maschine. Die zusätzliche Lageinformation ermöglicht ferner eine Korrektur von Messdaten der Gyroskopsensoreinheit und/oder der Beschleunigungssensoreinheit, wodurch eine besonders exakte Bestimmung der räumlichen Ausrichtung der einzelnen Sensorvorrichtung und somit des entsprechenden Maschinenteils ermöglicht wird.

Erfindungsgemäß umfasst das Sensorsystem ferner eine Lagebestimmungseinheit, der Messdaten der Gyroskopsensoreinheit und/oder der Beschleunigungssensoreinheit sowie der Antennenabstand von mindestens zwei der Sensorvorrichtungen bereitgestellt sind und die eingerichtet ist, basierend auf den bereitgestellten Gyroskopsensoreinheit-Messdaten und/oder Beschleunigungssensoreinheit-Messdaten sowie der bereitgestellten Antennenabstände Lagedaten für die mindestens zwei Sensorvorrichtungen zu bestimmen, wobei die bestimmten Lagedaten eine räumliche Lage der mindestens zwei Sensorvorrichtungen relativ zueinander angeben. Die Messdaten der Gyroskopsensoreinheit und/oder der Beschleunigungssensoreinheit geben im Allgemeinen eine räumliche Ausrichtung der jeweiligen Sensorvorrichtung an. Basierend auf der jeweiligen räumlichen Ausrichtung der Sensorvorrichtungen und dem jeweiligen Antennenabstand der Sensorvorrichtungen können - im Wesentlichen über geometrische Zusammenhänge - die Lagedaten bestimmt werden. Die Lagedaten geben hierbei zumindest einen Abstand zwischen den entsprechenden Sensorvorrichtungen an. Vorzugsweise geben die Lagedaten relative 3D-Koordinaten für die entsprechenden Sensorvorrichtungen an, also 3D-Koordinaten in einem Maschinenbezugssystem. Sofern für eine der Sensorvorrichtungen absolute 3D-Koordinaten, also 3D-Koordinaten im Erdbezugssystem, bekannt sind, können die relativen 3D-Koordinaten auf einfache Weise durch die Lagebestimmungseinheit oder eine nachgeschaltete Datenverarbeitungseinheit in absolute 3D-Koordinaten umgerechnet werden. Zur Bestimmung der Lagedaten sind hierbei keinen zusätzlichen Sensorvorrichtungen erforderlich, sodass das erfindungsgemäße Sensorsystem eine relativ einfache und dennoch zuverlässige Überwachung von Maschinenbewegungen ermöglicht.

Vorzugsweise umfasst das Sensorsystem mindestens eine Sensorvorrichtungskalibrierungseinheit, die eingerichtet ist, basierend auf den Antennenabständen von mindestens zwei der Sensorvorrichtungen eine Kalibrierung der Gyroskopsensoreinheit und/oder der Beschleunigungssensoreinheit mindestens einer der Sensorvorrichtungen durchzuführen. Sofern der Abstand zwischen zwei Sensorvorrichtungen sowie die Antennenabstände der beiden Sensorvorrichtungen bekannt sind, kann über geometrische Zusammenhänge die räumliche Ausrichtung der beiden Sensorvorrichtungen bestimmt werden. Die Gyroskopsensoreinheit und/oder der Beschleunigungssensoreinheit der entsprechenden Sensorvorrichtungen können dann derart kalibriert werden, dass die durch die Messdaten der Gyroskopsensoreinheit und/oder der Beschleunigungssensoreinheit angegebene räumliche Lage mit der aus den Abständen bestimmten räumlichen Lage übereinstimmt. Damit der Abstand zwischen den beiden Sensorvorrichtungen bekannt ist, kann beispielsweise ein vordefinierter Maschinenzustand eingestellt werden. Alternativ kann der Abstand zwischen den beiden Sensorvorrichtungen auch über eine oder mehrere zusätzliche Sensorvorrichtungen erfasst werden. Das Sensorsystem kann eine einzelne zentrale Sensorvorrichtungskalibrierungseinheit umfassen, die beispielsweise in einer zentralen Datenverarbeitungsvorrichtung angeordnet sein kann und die eingerichtet ist, eine Kalibrierung mehrerer, vorzugsweise aller, Sensorvorrichtungen durchzuführen. Alternativ ist auch vorstellbar, dass jede Sensorvorrichtung eine separate Sensorvorrichtungskalibrierungseinheit aufweist, der der Antennenabstand mindestens einer anderen Sensorvorrichtung bereitgestellt ist sowie der Abstand zu der mindestens einen anderen Sensorvorrichtung bekannt ist, und die eingerichtet ist, nur eine Kalibrierung der jeweiligen Sensorvorrichtung selbst durchzuführen. Die Sensorvorrichtungskalibrierungseinheit ermöglicht die Bereitstellung von besonders exakten und zuverlässigen Messdaten und somit eine besonders zuverlässige Überwachung einer Maschine durch die erfindungsgemäße Sensorvorrichtung.

Vorteilhafterweise umfasst das Sensorsystem mindestens eine Zentrifugalkraftkompensationseinheit, die eingerichtet ist: basierend auf den Lagedaten für mindestens eine Sensorvorrichtung einen Drehachsenabstand zu einer Drehachse der zu überwachenden Maschine zu bestimmen, basierend auf dem Drehachsenabstand und den Messdaten der Gyroskopsensoreinheit und/oder der Beschleunigungssensoreinheit der entsprechenden Sensorvorrichtung eine auf die entsprechende Sensorvorrichtung einwirkende Zentrifugalkraft abzuschätzen, und basierend auf der abgeschätzten Zentrifugalkraft eine Korrektur der Messdaten der Gyroskopsensoreinheit und/oder der Beschleunigungssensoreinheit der entsprechenden Sensorvorrichtung durchzuführen. Im Speziellen ist die Zentrifugalkraftkompensationseinheit eingerichtet, die Messdaten der Gyroskopsensoreinheit und/oder der Beschleunigungssensoreinheit derart zu korrigieren, dass durch die Einwirkung der Zentrifugalkraft in der der Gyroskopsensoreinheit und/oder der Beschleunigungssensoreinheit verursachte Messfehler kompensiert werden. Um eine einfache und zuverlässige Bestimmung des Drehachsenabstands zu ermöglichen, ist vorzugsweise eine der Sensorvorrichtungen dazu ausgelegt, in einem festen Abstand zu der Maschinendrehachse montiert zu werden, sodass aus einem Abstand zu dieser Sensorvorrichtung unmittelbar der Abstand zu der Drehachse abgeleitet werden kann. Besonders bevorzugt ist eine Sensorvorrichtung dazu ausgelegt unmittelbar an der Maschinendrehachse montiert zu werden, sodass der Abstand zu dieser Sensorvorrichtung im Wesentlichen dem Abstand zu der Maschinendrehachse entspricht. Das Sensorsystem kann eine einzelne zentrale Zentrifugalkraftkompensationseinheit umfassen, die beispielsweise in einer zentralen Datenverarbeitungsvorrichtung angeordnet sein kann und die eingerichtet ist, eine Korrektur der Messdaten mehrerer, vorzugsweise aller, Sensorvorrichtungen durchzuführen. Alternativ ist auch vorstellbar, dass jede Sensorvorrichtung eine separate Zentrifugalkraftkompensationseinheit aufweist, die eingerichtet ist, nur eine Kalibrierung der jeweiligen Sensorvorrichtung selbst durchzuführen. Die Zentrifugalkraftkompensationseinheit ermöglicht die Bereitstellung von besonders exakten und zuverlässigen Messdaten und somit eine besonders zuverlässige Überwachung einer Maschine durch die erfindungsgemäße Sensorvorrichtung.

Vorzugsweise ist die Funkdatenschnittstelle der Vielzahl von Sensorvorrichtungen jeweils eine 5G-Mobilfunkschnittstelle, welche einerseits auf Grund der Eigenschaften des 5G-Funksignals eine relativ exakte Bestimmung des Antennenabstands ermöglicht und andererseits eine direkte, relativ bandbreitenstarke Internetanbindung der Sensorvorrichtung ermöglicht, ohne dass hierfür zusätzliche Funk-Basisstationen in der Umgebung der Sensorvorrichtung vorgesehen werden müssen.

Ein Ausführungsbeispiel eines erfindungsgemäßen Sensorsystems mit einer Vielzahl von erfindungsgemäßen Sensorvorrichtungen wird nachfolgend anhand der beigefügten Figuren beschrieben, wobei

Figur 1 schematisch ein erfindungsgemäßes Sensorsystem mit einer Vielzahl von Sensorvorrichtungen, die an einem Bagger angeordnet sind, und eine Mobilfunk-Antennenvorrichtung zeigt,
Figur 2 eine schematische Draufsicht auf das Sensorsystem und die Mobilfunk-Antennenvorrichtung aus Figur 1 zeigt, wobei unter anderem Antennenabstände zwischen den einzelnen Sensorvorrichtungen des Sensorsystems und der Mobilfunk-Antennenvorrichtung, Sensorvorrichtungsabstände zwischen den einzelnen Sensorvorrichtungen des Sensorsystems und ein Drehachsenabstand zwischen einer Sensorvorrichtung und einer Maschinendrehachse eingezeichnet sind,

Figur 3 schematisch den Aufbau der Sensorvorrichtungen aus Figur 1 zeigt, und

Figur 4 schematisch den Aufbau einer zentralen Datenverarbeitungseinheit des Sensorsystems aus Figur 1 zeigt.

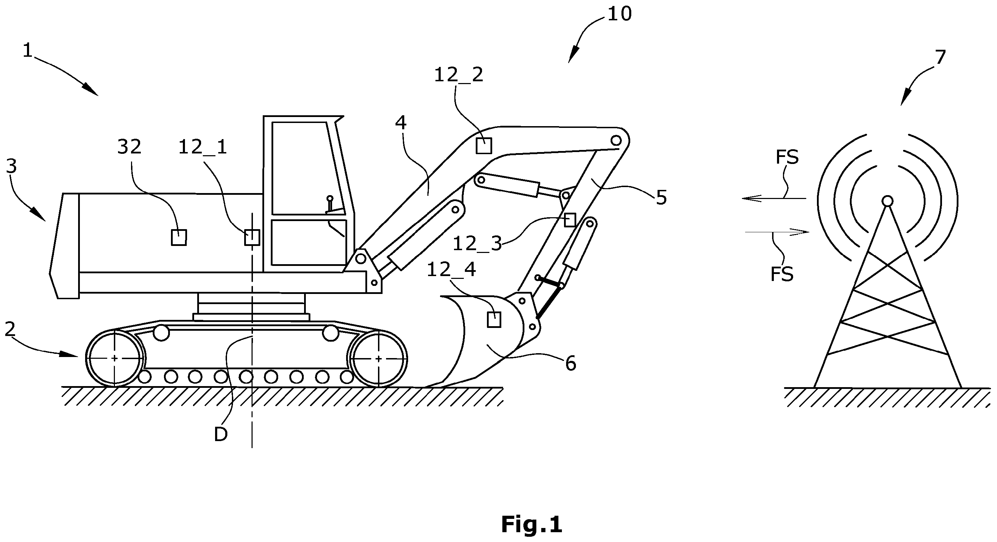

Figur 1 zeigt einen Bagger 1 mit einem Unterwagen 2, einem um eine Drehachse D drehbar auf dem Unterwagen gelagerten Oberwagen 3, einem schwenkbar an dem Oberwagen 3 befestigten Ausleger 4, einem schwenkbar an dem Ausleger 4 befestigten Baggerstiel 5 und einer schwenkbar an dem Baggerstiel 5 befestigten Baggerschaufel 6.

Figur 1 zeigt ferner eine Antennenvorrichtung 7, die im vorliegenden Ausführungsbeispiel eine 5G-Mobilfunk-Antennenvorrichtung ist, also eingerichtet ist, Mobilfunksignale FS gemäß des 5G-Standards zu senden und zu empfangen.

An dem Bagger 1 ist zur Erfassung einer räumlichen Lage und Ausrichtung des Baggers 1 sowie der einzelnen Teile 2-6 des Baggers 1 ein erfindungsgemäßes Sensorsystem 10 angeordnet.

Das Sensorsystem 10 umfasst im vorliegenden Ausführungsbeispiel vier Sensorvorrichtungen 12_1-12_4, die über ein Datenübertragungsnetzwerk 14 miteinander verbunden sind. Die erste Sensorvorrichtung 12_1 ist an dem Oberwagen 3 angeordnet, die zweite Sensorvorrichtung 12_2 ist an dem Ausleger 4 angeordnet, die dritte Sensorvorrichtung 12_3 ist an dem Baggerstiel 5 angeordnet, und die vierte Sensorvorrichtung 12_4 ist an der Baggerschaufel 6 angeordnet. Die erste Sensorvorrichtung 12_1 ist im vorliegenden Ausführungsbeispiel unmittelbar an der Drehachse D angeordnet.

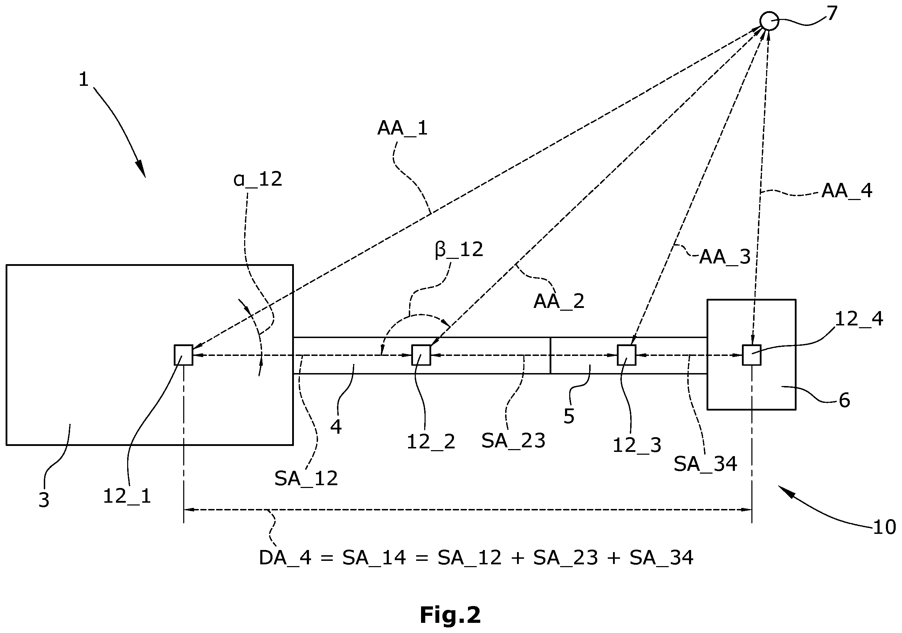

Figur 2 zeigt schematisch eine Draufsicht auf den Bagger 1 mit vollständig ausgefahrenem Ausleger 4 sowie vollständig ausgefahrenem Baggerstiel 5. Figur 2 zeigt ferner schematisch Antennenabstände AA_1-AA_4 zwischen den einzelnen Sensorvorrichtungen 12_1-12_4 und der Antennenvorrichtung 7, Sensorvorrichtungsabstände SA_12, SA_23, SA_34 zwischen benachbarten Sensorvorrichtungen 12_1-12_4, sowie beispielhaft einen Drehachsenabstand DA_4 zwischen der vierten Sensorvorrichtung 12_4 und der Drehachse D.

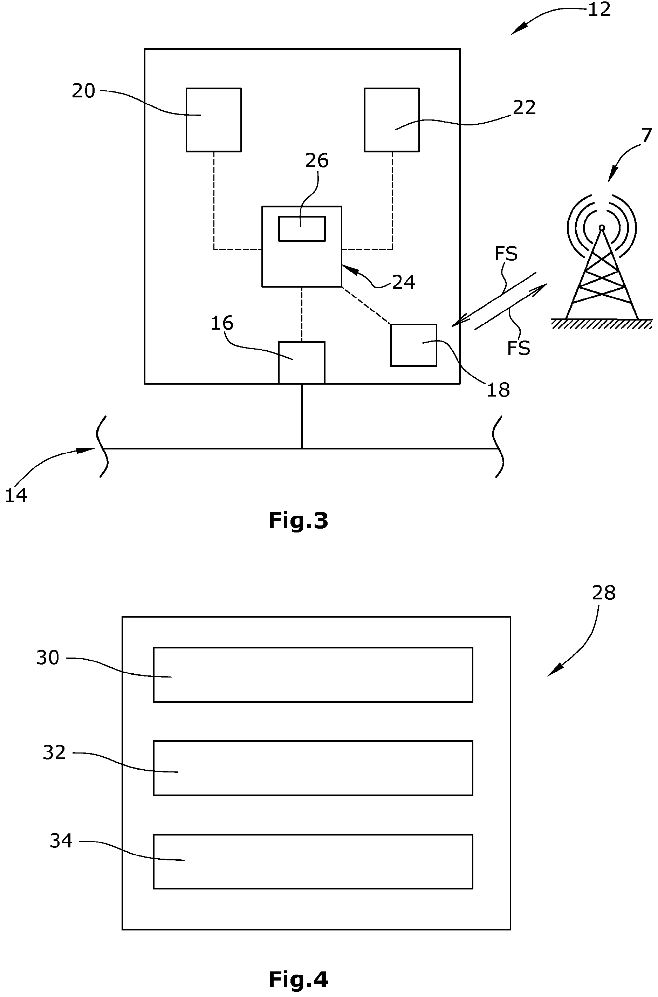

Figur 3 zeigt schematisch den Aufbau der Sensorvorrichtungen 12_1-12_4. Da die Sensorvorrichtungen 12_1-12_4 im vorliegenden Ausführungsbeispiel im Wesentlichen identisch aufgebaut sind, werden zur Vereinfachung in Figur 3 sowie in der nachfolgenden Beschreibung generische Bezugszeichen, also Bezugszeichen ohne Index 1-5, verwendet, sofern sie alle Sensorvorrichtungen 12_1-12_4 beziehungsweise eine beliebige der Sensorvorrichtungen 12_1-12_4 betreffen.

Jede Sensorvorrichtung 12 umfasst eine kabelgebundene Schnittstelle 16 zur Anbindung an das Datenübertragungsnetzwerk 14 sowie eine Funkschnittstelle 18 zur Datenübertragung über ein Funksignal FS. Die Funkschnittstelle 18 ist im vorliegenden Ausführungsbeispiel eine 5G-Mobilfunkschnittstelle, also eingerichtet, Mobilfunksignale gemäß des 5G-Standards zu senden und zu empfangen.

Jede Sensorvorrichtung 12 umfasst im vorliegenden Ausführungsbeispiel ferner eine dreiachsige Gyroskopsensoreinheit 20, die eingerichtet ist, Drehgeschwindigkeiten entlang dreier Raumachsen zu erfassen und entsprechende Gyroskopsensoreinheit-Messdaten bereitzustellen, sowie eine dreiachsige Beschleunigungssensoreinheit 22, die eingerichtet ist, Beschleunigungen entlang dreier Raumachsen zu erfassen und entsprechende Beschleunigungssensoreinheit-Messdaten bereitzustellen.

Jede Sensorvorrichtung 12 umfasst ferner eine Recheneinheit 24, die mit der Gyroskopsensoreinheit 20 und mit der Beschleunigungssensoreinheit 22 verbunden ist und eingerichtet ist, die Gyroskopsensoreinheit-Messdaten und die Beschleunigungssensoreinheit-Messdaten zu verarbeiten. Die Recheneinheit 24 umfasst eine Abstandsbestimmungseinheit 26, die eingerichtet ist, ein von der Antennenvorrichtung 7 empfangenes Funksignal FS zu analysieren und basierend auf dem Funksignal FS einen Antennenabstand AA von der jeweiligen Sensorvorrichtung 12 zu der Antennenvorrichtung 7 zu bestimmen.

Das Sensorsystem 10 umfasst im vorliegenden Ausführungsbeispiel ferner eine zentrale Datenverarbeitungseinheit 28, die an dem Oberwagen 3 angeordnet ist. Die zentrale Datenverarbeitungseinheit 28 ist über das Datenübertragungsnetzwerk 14 mit allen Sensorvorrichtungen 12 verbunden und hat Zugriff auf die Gyroskopsensoreinheit-Messdaten der Gyroskopsensoreinheit 20, die Beschleunigungssensoreinheit-Messdaten der Beschleunigungssensoreinheit 22 sowie den durch die Abstandsbestimmungseinheit 26 bestimmten Antennenabstand AA jeder einzelnen Sensorvorrichtung 12.

Die zentrale Datenverarbeitungseinheit 28 umfasst eine Lagebestimmungseinheit 30, die eingerichtet ist, basierend auf den von den Sensorvorrichtungen 12 bereitgestellten Messdaten und Antennenabständen AA für jede einzelne Sensorvorrichtung 12 individuelle Lagedaten zu bestimmen, die jeweils die räumliche Lage der Sensorvorrichtungen relativ zueinander angeben. Die Lagebestimmungseinheit 30 ist ferner eingerichtet, die Lagedaten an die einzelnen Sensorvorrichtungen 12 bereitzustellen.

Im vorliegenden Ausführungsbeispiel umfassen die individuellen Lagedaten unter anderem Sensorvorrichtungsabstände SA der jeweiligen Sensorvorrichtung 12 zu den jeweils anderen Sensorvorrichtungen 12. Der Sensorvorrichtungsabstand SA zwischen zwei beliebigen Sensorvorrichtungen 12 kann hierbei auf einfache Weise über geometrische Zusammenhänge aus den Antennenabständen AA der beiden Sensorvorrichtungen 12 sowie den Messdaten der beiden Sensorvorrichtungen bestimmt werden. Beispielsweise kann der in Figur 2 eingezeichnete Sensorvorrichtungsabstand SA_12 wie folgt bestimmt werden:

$$SA\_12 = \sqrt{AA\_1^2 + AA\_2^2 - 2 \cdot AA\_1 \cdot AA\_2 \cdot \cos\left(180° - \alpha\_12 - \beta\_12\right)}$$

wobei die Winkel $\alpha\_12$ und $\beta\_12$ aus den Messdaten der ersten Sensorvorrichtungen 12_1 und den Messdaten der zweiten Sensorvorrichtungen 12_2 ableitbar sind. Analog können auch alle anderen Sensorvorrichtungsabstände SA zwischen zwei Sensorvorrichtungen 12 basierend auf den Antennenabständen AA der entsprechenden Sensorvorrichtungen 12 und der aus den Messdaten der entsprechenden Sensorvorrichtungen 12 ableitbaren Winkel $\alpha$ und $\beta$ bestimmt werden.

Vorzugsweise umfassen die Lagedaten ferner relative 3D-Koordinaten, also Koordinaten bezogen auf ein Maschinenbezugssystem, und/oder absolute 3D-Koordinaten, also Koordinaten bezogen auf das Erdbezugssystem, für die jeweilige Sensorvorrichtung 12.

Die zentrale Datenverarbeitungseinheit 28 umfasst ferner eine Sensorvorrichtungskalibrierungseinheit 32, die eingerichtet ist, basierend auf den Antennenabständen AA der Sensorvorrichtungen 12 eine Kalibrierung der Gyroskopsensoreinheit 20 und/oder der Beschleunigungssensoreinheit 22 einer oder mehrerer der Sensorvorrichtungen 12 durchzuführen. Für den Fall, dass der Sensorvorrichtungsabstand SA zwischen zwei Sensorvorrichtungen 12 bekannt ist, beispielsweise wenn ein definierter Baggerzustand eingestellt ist, können beispielsweise die in Figur 2 eingezeichneten Winkel $\alpha\_12$ und $\beta\_12$ wie folgt aus dem Antennenabstand AA_1, dem Antennenabstand AA_2 und dem Sensorvorrichtungsabstand SA_12 bestimmt werden:

$$\alpha\_12 = \arccos\left(\frac{AA\_2^2 - AA\_1^2 - SA\_12^2}{-2 \cdot AA\_1 \cdot SA\_12}\right)$$

$$\beta\_12 = \arccos\left(\frac{AA\_1^2 - AA\_2^2 - SA\_12^2}{-2 \cdot AA\_2 \cdot SA\_12}\right)$$

Basierend auf den bestimmten Winkeln $\alpha\_12$ und $\beta\_12$ können die Gyroskopsensoreinheit 20 und/oder die Beschleunigungssensoreinheit 22 der ersten Sensorvorrichtung 12_1 und der zweiten Sensorvorrichtung 12_2 jeweils derart kalibriert werden, dass die aus den Messdaten der beiden Sensorvorrichtungen 12 ableitbaren Winkel $\alpha\_12$ und $\beta\_12$ mit den basierend auf den Antennenabständen AA und dem Sensorvorrichtungsabstand SA bestimmten Winkeln $\alpha\_12$ und $\beta\_12$ übereinstimmen. Analog können auch die Gyroskopsensoreinheit 20 und/oder die Beschleunigungssensoreinheit 22 aller anderen Sensorvorrichtungen 12 basierend auf den jeweiligen Antennenabständen AA und dem jeweiligen Sensorvorrichtungsabstand SA kalibriert werden.

Die zentrale Datenverarbeitungseinheit 28 umfasst ferner eine Zentrifugalkraftkompensationseinheit 34, die eingerichtet ist, basierend auf den von der Lagebestimmungseinheit 30 bestimmten Lagedaten einen Drehachsenabstand DA zu der Drehachse D für die einzelnen Sensorvorrichtungen 12 zu bestimmen. Da die erste Sensorvorrichtung 12_1 im vorliegenden Ausführungsbeispiel unmittelbar an der Drehachse D angeordnet ist, ist der Drehachsenabstand DA_1 der ersten Sensorvorrichtung 12_1 gleich Null und entsprechen die Drehachsenabstände DA_2-DA_4 der übrigen Sensorvorrichtungen 12_2-12_4 jeweils im Wesentlichen dem Sensorvorrichtungsabstand SA zwischen der jeweiligen Sensorvorrichtung 12 und der ersten Sensorvorrichtung 12_1. Die Zentrifugalkraftkompensationseinheit 34 ist ferner eingerichtet, basierend auf den bestimmten Drehachsenabständen DA und den Messdaten der einzelnen Sensorvorrichtungen 12 eine bei einer Drehung um die Drehachse D auf die einzelnen Sensorvorrichtungen 12 einwirkende Zentrifugalkraft zu bestimmen, und basierend auf der bestimmten Zentrifugalkraft eine Korrektur der Gyroskopsensoreinheit-Messdaten und/oder der Beschleunigungssensoreinheit-Messdaten der einzelnen Sensorvorrichtungen 12 durchzuführen.

Es sei explizit angemerkt, dass die Funktionen der im vorliegenden Ausführungsbeispiel vorhandenen zentralen Datenverarbeitungseinheit 28 auch vollständig oder teilweise von der Recheneinheit 24 einer oder mehrerer Sensorvorrichtungen 12 übernommen werden kann. Insbesondere können die Lagebestimmungseinheit 30, die Sensorvorrichtungskalibrierungseinheit 32 und/oder die Zentrifugalkraftkompensationseinheit 34 auch in der Recheneinheit 24 einer der Sensorvorrichtungen 12 umfasst sein. Ferner ist auch vorstellbar, dass mehrere dezentrale Lagebestimmungseinheiten, Sensorvorrichtungskalibrierungseinheiten und/oder Zentrifugalkraftkompensationseinheiten vorhanden sind, die die entsprechenden Funktionen nur für einen Teil der Sensorvorrichtungen 12 ausführt. Beispielsweise kann jede Sensorvorrichtung 12 eine separate Lagebestimmungseinheit, Sensorvorrichtungskalibrierungseinheit und/oder Zentrifugalkraftkompensationseinheit aufweisen, die die entsprechenden Funktionen nur für die jeweilige Sensorvorrichtung 12 selbst ausführt.

Ferner sei explizit darauf hingewiesen, dass das erfindungsgemäße Sensorsystem grundsätzlich zur Überwachung beliebiger Maschinen verwendbar ist. Insbesondere ist das erfindungsgemäße Sensorsystem auch zur Überwachung anderer Baumaschinen, beispielsweise zur Überwachung von Kränen oder Planierraupen, verwendbar.

**Bezugszeichenliste**

| | |
|---|---|
| 1 | Bagger |
| 2 | Unterwagen |
| 3 | Oberwagen |
| 4 | Ausleger |
| 5 | Baggerstiel |
| 6 | Baggerschaufel |
| 7 | Antennenvorrichtung |
| 10 | Sensorsystem |
| 12 | Sensorvorrichtungen |
| 14 | Datenübertragungsnetzwerk |
| 16 | kabelgebundene Schnittstelle |
| 18 | Funkschnittstelle |
| 20 | Gyroskopsensoreinheit |
| 22 | Beschleunigungssensoreinheit |
| 24 | Recheneinheit |
| 26 | Abstandsbestimmungseinheit |
| 28 | zentrale Datenverarbeitungseinheit |
| 30 | Lagebestimmungseinheit |
| 32 | Sensorvorrichtungskalibrierungseinheit |
| 34 | Zentrifugalkraftkompensationseinheit |
| AA | Antennenabstände |
| D | Drehachse |
| DA | Drehachsenabstände |
| FS | Funksignal |
| SA | Sensorvorrichtungsabstände |

**Patentansprüche**

1. Sensorsystem (10) zur Überwachung einer Maschine (1), umfassend:

   - eine Vielzahl von Sensorvorrichtungen (12), jede dieser Sensorvorrichtungen jeweils umfassend

     • eine Gyroskopsensoreinheit (20) und/oder eine Beschleunigungssensoreinheit (22),
     • eine Funkschnittstelle (18) zur Datenübertragung über ein Funksignal, und
     • eine Abstandsbestimmungseinheit (26), die eingerichtet ist, ein empfangenes Funksignal (FS) zu analysieren und basierend auf dem Funksignal (FS) einen Antennenabstand (AA) zu einer Antennenvorrichtung (7) zu bestimmen, von der das empfangene Funksignal (FS) ausgesendet wurde, und

     - eine Lagebestimmungseinheit (30), der Messdaten der Gyroskopsensoreinheit (20) und/oder der Beschleunigungssensoreinheit (22) sowie der Antennenabstand (AA) von mindestens zwei der Sensorvorrichtungen (12) bereitgestellt sind und die eingerichtet ist, basierend auf den bereitgestellten Messdaten und Antennenabständen (AA) Lagedaten für die mindestens zwei Sensorvorrichtungen (12) zu bestimmen, die eine räumliche Lage der mindestens zwei Sensorvorrichtungen (12) relativ zueinander angeben.

2. Sensorsystem (10) nach Anspruch 1, zusätzlich umfassend eine Sensorvorrichtungskalibrierungseinheit (32), die eingerichtet ist, basierend auf den Antennenabständen (AA) von mindestens zwei der Sensorvorrichtungen (12) eine Kalibrierung der Gyroskopsensoreinheit (20) und/oder der Beschleunigungssensoreinheit (22) mindestens einer der Sensorvorrichtungen (12) durchzuführen.

3. Sensorsystem (10) nach Anspruch 1 oder 2, zusätzlich umfassend eine Zentrifugalkraftkompensationseinheit (34), die eingerichtet ist:

   - basierend auf den Lagedaten für mindestens eine Sensorvorrichtung (12) einen Drehachsenabstand (DA) zu einer Drehachse (D) der zu überwachenden Maschine (1) zu bestimmen,
   - basierend auf dem bestimmten Drehachsenabstand (DA) sowie den Messdaten der Gyroskopsensoreinheit (20) und/oder der Beschleunigungssensoreinheit (22) der entsprechenden Sensorvorrichtung (12) eine auf die entsprechende Sensorvorrichtung (12) einwirkende Zentrifugalkraft abzuschätzen, und
   - basierend auf der abgeschätzten Zentrifugalkraft eine Korrektur der Messdaten der Gyroskopsensoreinheit (20) und/oder der Beschleunigungssensoreinheit (22) der entsprechenden Sensorvorrichtung (12) durchzuführen.

4. Sensorsystem (10) nach einem der vorhergehenden Ansprüche, wobei die Funkschnittstelle (18) der Vielzahl von Sensorvorrichtungen (12) jeweils eine 5G-Mobilfunkschnittstelle ist.


**Claims**

1. Sensor system (10) for monitoring a machine (1), comprising:

   - a plurality of sensor devices (12), wherein each sensor device comprises:

     • a gyroscope sensor unit (20) and/or an acceleration sensor unit (22),
     • a radio interface (18) for data transmission via a radio signal, and
     • a distance determination unit (26) which is configured to analyze a received radio signal (FS) and, based on the radio signal (FS), to determine an antenna distance (AA) to an antenna device (7) from which the received radio signal (FS) was transmitted, and

   - a position determination unit (30) to which measurement data from the gyroscope sensor unit (20) and/or the acceleration sensor unit (22) as well as the antenna distance (AA) of at least two of the sensor devices (12) are provided, and which is configured to determine, based on the provided measurement data and antenna distances (AA), position data for the at least two sensor devices (12), wherein the position data indicate a spatial position of the at least two sensor devices (12) relative to one another.

2. Sensor system (10) according to claim 1, further comprising a sensor device calibration unit (32) which is configured to perform, based on the antenna distances (AA) of at least two of the sensor devices (12), a calibration of the gyroscope sensor unit (20) and/or the acceleration sensor unit (22) of at least one of the sensor devices (12).

3. Sensor system (10) according to claim 1 or 2, further comprising a centrifugal-force compensation unit (34) which is configured to:

   - determine, based on the position data for at least one sensor device (12), a rotational-axis distance (DA) to a rotational axis (D) of the machine (1) to be monitored,
   - estimate, based on the determined rotational-axis distance (DA) and the measurement data of the gyroscope sensor unit (20) and/or the acceleration sensor unit (22) of the corresponding sensor device (12), a centrifugal force acting on the corresponding sensor device (12), and
   - perform, based on the estimated centrifugal force, a correction of the measurement data of the gyroscope sensor unit (20) and/or the acceleration sensor unit (22) of the corresponding sensor device (12).

4. Sensor system (10) according to one of the preceding claims, wherein the radio interface (18) of each of the plurality of sensor devices (12) is a 5G mobile radio interface.


**Revendications**

1. Système de capteur (10) pour surveiller une machine (1), comprenant :

- une pluralité de dispositifs de capteur (12), chacun de ces dispositifs de capteur comprenant respectivement

  • une unité de capteur gyroscopique (20) et/ou une unité de capteur d'accélération (22),
  • une interface radio (18) pour la transmission de données par l'intermédiaire d'un signal radio, et
  • une unité de détermination de distance (26) qui est conçue pour analyser un signal radio reçu (FS) et pour déterminer, sur la base du signal radio (FS), une distance d'antenne (AA) par rapport à un dispositif d'antenne (7) à partir duquel le signal radio reçu (FS) a été émis, et

- une unité de détermination de position (30) qui met à disposition des données de mesure de l'unité de capteur gyroscopique (20) et/ou de l'unité de capteur d'accélération (22) ainsi que la distance d'antenne (AA) d'au moins deux des dispositifs de capteur (12) et qui est conçue pour déterminer, sur la base des données de mesure mises à disposition et des distances d'antenne (AA), des données de position pour les au moins deux dispositifs de capteur (12) qui indiquent une position spatiale des au moins deux dispositifs de capteur (12) l'un par rapport à l'autre.

2.  Système de capteur (10) selon la revendication 1, comprenant en outre une unité d'étalonnage de dispositif de capteur (32) qui est conçue pour effectuer, sur la base des distances d'antenne (AA) d'au moins deux des dispositifs de capteur (12), un étalonnage de l'unité de capteur gyroscopique (20) et/ou de l'unité de capteur d'accélération (22) d'au moins un des dispositifs de capteur (12).

3.  Système de capteur (10) selon la revendication 1 ou 2, comprenant en outre une unité de compensation de force centrifuge (34) qui est conçue pour :

    - déterminer, sur la base des données de position pour au moins un dispositif de capteur (12), une distance d'axe de rotation (DA) par rapport à un axe de rotation (D) de la machine (1) à surveiller,
    - estimer, sur la base de la distance d'axe de rotation (DA) déterminée ainsi que des données de mesure de l'unité de capteur gyroscopique (20) et/ou de l'unité de capteur d'accélération (22) du dispositif de capteur (12) correspondant, une force centrifuge agissant sur le dispositif de capteur (12) correspondant, et
    - effectuer, sur la base de la force centrifuge estimée, une correction des données de mesure de l'unité de capteur gyroscopique (20) et/ou de l'unité de capteur d'accélération (22) du dispositif de capteur (12) correspondant.

4.  Système de capteur (10) selon l'une quelconque des revendications précédentes, dans lequel l'interface radio (18) de la pluralité de dispositifs de capteur (12) est respectivement une interface radio mobile 5G.

**Fig.1**

EP 4 399 483 B1

**Fig.2**

**Fig.3**

**Fig.4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20180372498 A1
- WO 2018236343 A1